# FASCICULE DE BREVET EUROPEEN

(11) **EP 0 664 329 B1**
(45) Date de publication et mention de la délivrance du brevet: **24.06.1998**
(21) Numéro de dépôt: 95400081.6
(22) Date de dépôt: 17.01.1995
(51) Int. Cl.: C09K 5/00, B01J 20/20

(54) **Réactif en forme de granules pour systèmes thermochimiques**
Reagenz in granulierter Form für thermochemische Systeme
Reagent in granular form for thermochemical systems

(30) Priorité: 19.01.1994 FR 9400512
(43) Date de publication de la demande: 26.07.1995
(73) Titulaire: ELF AQUITAINE, 92400 Courbevoie (FR)
(72) Inventeur: Lambotte, Benoit, F-92420 Vaucresson (FR); Timoney, Charles, F-78620 l'Etang la Ville (FR); Spinner, Bernard, F-66200 Corneilla Del Vercol (FR); Prosdocimi, Jacques, F-66680 Canohes (FR)
(74) Mandataire: Timoney, Ian Charles Craig

(56) Documents cités:
- EP-A- 0 129 473
- EP-A- 0 307 296
- WO-A-91/15292
- FR-A- 2 546 278
- FR-A- 2 553 183

## Description

La présente invention se rapporte à un réactif en forme de granulés pour systèmes thermochimiques.

Dans le domaine des systèmes thermochimiques fondés sur la thermicité de la réaction entre un solide et un gaz, ou de l'adsorption d'un gaz sur un solide, on utilise un mélange d'un matériau divisé, tel que le graphite expansé, et d'un réactif solide, par exemple un sel, ou respectivement d'un adsorbant comme un zéolithe. Le mélange de graphite expansé et de ce solide, siège d'une réaction chimique ou d'une adsorption physique, présente de nombreux avantages lors d'une réaction chimique ou d'une adsorption physique entre le solide et le gaz. Le graphite expansé se présentant sous forme de feuillets a une très grande surface spécifique et permet la diffusion du gaz même en milieu confiné.

Le document FR-A-2 547 512 décrit un procédé de mise en oeuvre de réaction gaz solide, dans lequel on utilise, comme siège de réaction d'un système thermochimique, un mélange de graphite expansé et d'un sel, ce mélange se présentant sous forme pulvérulente. Ce mélange permet d'emplir des chambres de réaction d'un système thermochimique ayant des formes irrégulières ou non-rectilignes. Cependant, la conductibilité thermique du mélange, bien que supérieure à celle d'un sel, est trop faible pour que les systèmes thermochimiques atteignent des niveaux de performance satisfaisants. De plus, le chargement d'une chambre de réaction avec un mélange pulvérulent de graphite expansé et de sel est une opération délicate, les deux éléments ayant tendance à se séparer.

Dans le document WO 91/15292, il a été proposé de réaliser un composite actif en préparant un support formé d'un bloc de graphite expansé recomprimé qui est ensuite imprégné de l'extérieur, par exemple, par une solution d'un agent actif, par exemple un sel, le support imprégné étant ensuite séché pour réaliser le composite actif. Le composite actif ainsi réalisé a une conductibilité thermique nettement supérieure à celle du graphite expansé en feuillets, tout en gardant une porosité importante du flux gazeux.

Malgré des avantages indéniables, le composite actif préparé selon le procédé décrit dans le document WO 91/15292 ne donne pas entièrement satisfaction. En effet, ce composite actif se présentant sous forme de blocs rigides ayant généralement une forme cylindrique, les chambres de réaction, destinées à recevoir un tel bloc, sont limitées à des formes rectilignes.

De plus, afin de pouvoir assurer certaines applications, il conviendrait d'avoir une chambre de réaction souple ou flexible. Un composite actif en forme de blocs rigides ne permet pas de remplir de telles chambres de réaction.

La présente invention a donc pour objet un réactif pour systèmes thermochimiques qui possède une bonne conductibilité thermique et qui permet le chargement de chambres de réaction ayant des formes irrégulières ou non-rectilignes.

La présente invention a également pour objet un réactif pour systèmes thermochimiques qui permet l'utilisation de chambres de réaction souples ou flexibles.

Pour ce faire, l'invention propose un réactif pour systèmes thermochimiques comprenant un support et un agent actif, caractérisé en ce qu'il se présente sous forme de granulés en graphite de densité comprise entre 0,02 et 0,5 et dont le diamètre se trouve entre 0,2 cm et 2,5 cm.

Le réactif est caractérisé en ce que chaque granulé comprend du graphite expansé recomprimé, imprégné de l'agent actif.

Du reste le réactif est caractérisé en ce que chaque granulé comprend un composé lamellaire exfolié imprégné de l'agent actif et au surplus est caractérisé en ce que chaque granulé comprend un mélange du composé lamellaire exfolié imprégné et de graphite expansé recomprimé.

En outre le réactif est caractérisé en ce que les granulés ont une forme sensiblement sphérique de diamètre compris entre 0,5 et 1,5 cm.

De plus le réactif est caractérisé en ce qu'il comprend, en outre, du graphite expansé de densité comprise entre 0,001 et 0,02.

D'autres caractéristiques et avantages de la présente invention apparaîtront plus clairement à la lecture de la description ci-après faite en référence aux dessins annexés dans lesquels :
- la figure 1 est un schéma d'une chambre de réaction d'un système thermochimique contenant un réactif selon l'invention ; et
- la figure 2 est un schéma d'une chambre de réaction selon un deuxième mode de réalisation de l'invention.

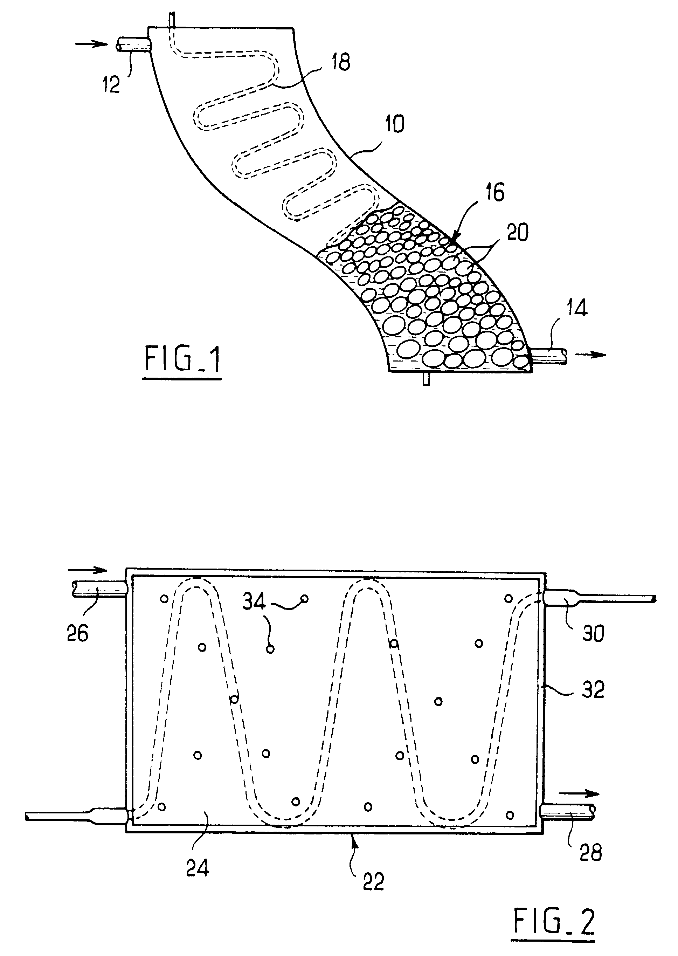

Sur la figure 1 est représentée schématiquement une chambre 10 de réaction de forme irrégulière ou non-rectiligne. La chambre 10 est étanche et construite en métal, de préférence en acier inoxydable. La chambre 10 comporte une entrée 12 et une sortie 14 d'un gaz qui est destiné à réagir avec un réactif, représenté généralement en 16, disposé dans la chambre 10. La chambre 10 est munie d'un système caloporteur 18 destiné à permettre l'échange de calories entre le réactif 16 et une source non-représentée, à l'extérieur de la chambre.

Selon l'invention, la chambre 16 contient du réactif en forme de granulés. Comme on le voit sur la figure 1, le réactif est formé de granulés 20 qui, dans l'exemple illustré, sont généralement sphériques. Ces granulés peuvent comprendre divers matériaux comme il sera décrit ci-dessous.

### EXEMPLE I

Des granulés sphériques ayant un diamètre compris entre 2 mm et 2,5 cm et, de préférence, entre 5 mm et 1,5 cm sont formés par moulage en recomprimant du graphite expansé de densité comprise entre 0,001 et 0,02 afin que sa densité se trouve entre 0,02 et 0,5. Ces granulés sont ensuite imprégnés d'un agent actif, par exemple, un sel, tel qu'il est décrit dans le document WO 91/15292.

La chambre 10 est emplie de granulés qui, nécessairement laissent entre eux des espaces vides. Afin d'éviter une réduction importante de la conductibilité thermique globale du réactif présent dans la chambre 10, les interstices entre les granulés sont comblés par du graphite expansé en forme de poudre. Le mélange de granulés et de graphite expansé peut être avantageusement comprimé dans la chambre afin d'améliorer la conductibilité thermique avec la paroi de la chambre.

### EXEMPLE II

Des granulés sphériques de dimensions analogues à celles de l'exemple I sont préparés en comprimant un mélange pulvérulent de graphite expansé de densité comprise entre 0,001 et 0,02 et d'un agent actif, par exemple un sel. Le mélange pulvérulent est comprimé dans un moule approprié afin que les granulés résultant aient une densité en graphite comprise entre 0,02 et 0,5. Les granulés sont utilisés pour emplir une chambre 10 comme décrit dans l'exemple I.

### EXEMPLE III

Des granulés de forme irrégulière de taille 0,2 à 1,5 cm sont formés d'un composé lamellaire exfolié tel que la vermiculite. Ces granulés sont immergés dans une solution d'un agent actif, par exemple un sel, et ensuite sont séchés afin de créer des granulés imprégnés. Ces granulés imprégnés sont utilisés, en combinaison avec du graphite expansé, pour emplir des chambres de réaction. Dans un mode de réalisation alternatif, des granulés imprégnés sont mélangés à du graphite expansé et ensuite le mélange résultant est recomprimé dans un moule afin de former des billes de graphite expansé recomprimé contenant des granulés de vermiculite imprégnée. Ces billes sont utilisées, en combinaison avec du graphite expansé pour emplir des chambres de réaction, par exemple comme décrit dans l'Exemple I.

Afin d'assurer qu'une chambre de réaction, de forme irrégulière, est emplie, de manière homogène, de mélange de réactif en forme de granulés et de graphite expansé, l'opération de chargement peut se faire en entraînant le mélange par un courant d'air sec ou de gaz inerte. Dans ce cas, le chargement s'effectue par une extrémité de la chambre de réaction, l'extrémité opposée étant sélectivement ouverte afin de permettre la sortie de l'air.

Dans un mode de réalisation alternatif, les granulés peuvent être moulés avec une forme sensiblement cubique. Ces granulés sont par la suite soumis à un traitement leur donnant une forme polyhédrique ou généralement arrondie.

On peut aussi prévoir de charger une chambre de réaction ayant au départ une forme sensiblement rectiligne, et, une fois que la chambre est chargée et fermée, de lui donner une autre forme, soit mécaniquement, soit par thermoformage. La nature granuleuse du réactif permet une déformation considérable de la chambre de réaction.

La nature granuleuse du réactif selon l'invention permet également de changer la forme d'une chambre de réaction après remplissage et aussi de prévoir des chambres de réaction souples.

Sur la figure 2 est représentée une chambre de réaction 22 comprenant une enveloppe souple 24 qui, dans l'exemple illustré, est sensiblement rectangulaire. La chambre de réaction 22 comporte une entrée 26 et une sortie 28 pour un gaz destiné à réagir avec un réactif disposé à l'intérieur de la chambre, ainsi qu'un système caloporteur 30 destiné à permettre l'échange de calories entre le réactif et une source, non-représentée, à l'extérieur de la chambre de réaction.

L'enveloppe souple 24 est formée de deux faces, chacune de construction multi-couches, reliées ensemble par des soudures 32. Chaque face de l'enveloppe souple comprend au moins une couche de matière plastique liée à une couche métallique. Afin que l'enveloppe garde une forme sensiblement aplatie, les deux faces sont reliées entre elles, par exemple, par des points de soudure 34. L'enveloppe souple 24 est chargée de granulés de réactif et de graphite expansé comme dans les exemples précédentes.

Le système caloporteur 30 peut comprendre un espace défini entre deux couches d'une des faces de l'enveloppe.

## Revendications

1. Réactif pour systèmes thermochimiques comprenant un support et un agent actif, caractérisé en ce qu'il se présente sous forme de granulés en graphite de densité comprise entre 0,02 et 0,5 et dont le diamètre se trouve entre 0,2 cm et 2,5 cm.

2. Réactif selon la revendication 1, caractérisé en ce que chaque granulé comprend du graphite expansé recomprimé, imprégné de l'agent actif.

3. Réactif selon la revendication 1, caractérisé en ce que chaque granulé comprend un composé lamellaire exfolié imprégné de l'agent actif.

4. Réactif selon la revendication 3 caractérisé en ce que chaque granulé comprend un mélange du composé lamellaire exfolié imprégné et de graphite expansé recomprimé.

5. Réactif selon l'une des revendications précédentes caractérisé en ce que les granulés ont une forme sensiblement sphérique de diamètre compris entre 0,5 et 1,5 cm.

6. Réactif selon l'une des revendications 1 à 5 caractérisé en ce qu'il comprend, en outre, du graphite expansé de densité comprise entre 0,001 et 0,02.

## Patentansprüche

1. Reagens für thermochemische Systeme, die einen Träger und einen Wirkstoff umfassen, dadurch **gekennzeichnet**, daß dieser in Form eines Granulats aus Graphit mit einer Dichte von 0,02 bis 0,5 und einem Durchmesser von 0,2 bis 2,5 cm vorliegt.

2. Reagens nach Anspruch 1, dadurch **gekennzeichnet**, daß jedes Granül wiederverdichteten, expandierten, mit einem Wirkstoff getränkten Graphit umfaßt.

3. Reagens nach Anspruch 1, dadurch **gekennzeichnet**, daß jedes Granül eine aufgeblätterte, lamelläre Verbindung umfaßt, die mit einem Wirkstoff getränkt ist.

4. Reagens nach Anspruch 3, dadurch **gekennzeichnet**, daß jedes Granül ein Gemisch aus getränkter aufgeblätterter, lamellärer Verbindung und wiederverdichtetem, expandiertem Graphit umfaßt.

5. Reagens nach einem der vorhergehenden Ansprüche, dadurch **gekennzeichnet**, daß das Granulat eine annähernd sphärische Form mit einem Durchmesser von 0,5 bis 1,5 cm besitzt.

6. Reagens nach einem der Ansprüche 1 bis 5, dadurch **gekennzeichnet**, daß es außerdem noch expandierten Graphit mit einer Dichte von 0,001 bis 0,02 umfaßt.

## Claims

1. Reagent for thermochemical systems comprising a support and an active agent, characterised in that it is in the form of graphite granules having a density of between 0.02 and 0.5 and whose diameter lies between 0.2 cm and 2.5 cm.

2. Reagent according to claim 1, characterised in that each granule comprises re-compressed expanded graphite impregnated with the active agent.

3. Reagent according to claim 1, characterised in that each granule comprises an exfoliated, lamellar compound impregnated with the active agent.

4. Reagent according to claim 3, characterised in that each granule comprises a mixture of the impregnated, exfoliated, lamellar compound and re-compressed expanded graphite.

5. Reagent according to any one of the preceding claims, characterised in that the granules have a substantially spherical shape having a diameter of between 0.5 and 1.5 cm.

6. Reagent according to any one of claims 1 to 5, characterised in that it additionally comprises expanded graphite having a density of between 0.001 and 0.02.
